# EUROPÄISCHE PATENTANMELDUNG

(11) **EP 1 586 484 A2**
(43) Veröffentlichungstag der Anmeldung: **19.10.2005**
(21) Anmeldenummer: 05007825.2
(22) Anmeldetag: 09.04.2005
(51) Int. Cl.: B60N 2/36, B60N 2/433

(54) **Schliessvorrichtung in einem Fahrzeug, insbesondere für einen Fahrzeugsitz**

(30) Priorität: 17.04.2004 DE 102004018742
(71) Anmelder: KEIPER GmbH & Co. KG, 67657 Kaiserslautern (DE)
(72) Erfinder: Bäumchen, Carsten, 66649 Oberthal (DE)
(74) Vertreter: Patentanwälte Hosenthien-Held und Dr. Held

(57) **Zusammenfassung**

Bei einer Schließvorrichtung (11) in einem Fahrzeug, insbesondere für einen Fahrzeugsitz, mit einem Gehäuse (13), einer am Gehäuse (13) gelagerten Klinke (21), welche zum Verriegeln der Schließvorrichtung (11) mit einem Gegenelement (B) zusammenwirkt, und wenigstens einem Sicherungselement (31), welches wenigstens im Normalfall die Klinke (21) gegen ein Öffnen sichert, besteht die Schließvorrichtung (11) vollständig oder nahezu vollständig aus Kunststoff.

## Beschreibung

Die Erfindung betrifft eine Schließvorrichtung in einem Fahrzeug, insbesondere für einen Fahrzeugsitz, mit den Merkmalen des Oberbegriffs des Anspruches 1.

Bei einer bekannten Schließvorrichtung dieser Art (DE 10115 667 A1) sind die meisten Einzelteile aus Stahl gefertigt, um die notwendige Festigkeit zu erhalten und einem Verschleiß durch häufige Benutzung, d.h. häufigem Verriegeln und Entriegeln und häufiger Belastung zwischen Schließvorrichtung und Gegenelement, zu begegnen. Derartige Schließvorrichtungen sind relativ teuer und aufwendig in der Montage.

Der Erfindung liegt die Aufgabe zu Grunde, eine Schließvorrichtung der eingangs genannten Art zu verbessern, insbesondere hinsichtlich der Herstellung. Diese Aufgabe wird erfindungsgemäß durch eine Schließvorrichtung mit den Merkmalen des Anspruches 1 gelöst. Vorteilhafte Ausgestaltungen sind Gegenstand der Unteransprüche.

Dadurch, dass die Schließvorrichtung vollständig oder nahezu vollständig aus Kunststoff besteht, wird die Herstellung der Schließvorrichtung einfacher und kostengünstiger, wobei Kunststoff für das Gehäuse, die Klinke und das Sicherungselement, d.h. für wesentliche Bauteile der Schließvorrichtung, verwendet wird. Zudem verringert sich das Gewicht. Es ist dabei nicht ausgeschlossen, dass für eine gezielte Erhöhung der Festigkeit einzelne Bauteile der Schließvorrichtung Einlegeteile aus einem von Kunststoff verschiedenen Material aufweisen, wobei die Einlegeteile wenigstens überwiegend mit Kunststoff bedeckt sind.

Die Schließvorrichtung wird vorzugsweise mittels eines Mehrkomponentenkunststoffspritzgußverfahrens hergestellt, so dass alle Bauteile gleichzeitig oder hintereinander mit den gewünschten Materialeigenschaften hergestellt werden können, was die Herstellungszeit verkürzt und damit die Herstellung verbilligt. Dabei entstehen die Bauteile der Schließvorrichtung vorzugsweise in einem gemeinsamen Werkzeug an ihrem Einbauort, so dass ein späterer Zusammenbau der einzelnen Bauteile entfällt. Durch die Eigenschaften der verschiedenen Kunststoffkomponenten werden die gewünschte Beweglichkeit und gegebenenfalls Elastizität der Bauteile und die Festigkeit der Schließvorrichtung eingestellt.

Zum Sichern der Klinke ist vorzugsweise neben einer Spannfläche für den Normalfall eine Fangfläche zum Abstützen der Klinke im Crashfall vorgesehen, wobei diese Flächen am gleichen Sicherungselement oder zwei verschiedenen Sicherungselementen vorgesehen sein kann.

Die erfindungsgemäße Schließvorrichtung kann für einen Fahrzeugsitz eingesetzt werden, vorzugsweise in Bereichen, in denen nur geringe Kräfte übertragen werden sollen und ein Entriegeln nur für Reparaturzwecke vorgesehen ist. Sie kann aber auch mit dem gleichen Zweck an anderen Stelle im Fahrzeug eingesetzt werden.

Im folgenden ist die Erfindung anhand eines in der Zeichnung dargestellten Ausführungsbeispiels näher erläutert. Es zeigen
- Fig. 1: eine Ansicht des Ausführungsbeispiels,
- Fig. 2: einen Schnitt entlang der Linie II-II in Fig. 1, und
- Fig. 3: einen schematisch dargestellten Fahrzeugsitz.

Ein Fahrzeugsitz 1 ist als Rücksitzanlage eines Kraftfahrzeuges vorgesehen. Bei dem Kraftfahrzeug, dessen Fahrzeugstruktur mit S bezeichnet ist, handelt es sich vorliegend um eine Limousine mit Stufenheck. Die Lehne 3 des Fahrzeugsitzes 1 ist daher wenigstens im Bereich ihres oberen Endes fest mit der Fahrzeugstmktur S verriegelt, und zwar mittels wenigstens einer Schließvorrichtung 11, welche mit einem Gegenelement B, beispielsweise einem Bolzen oder Bügel, der Fahrzeugstruktur S zusammenwirkt.

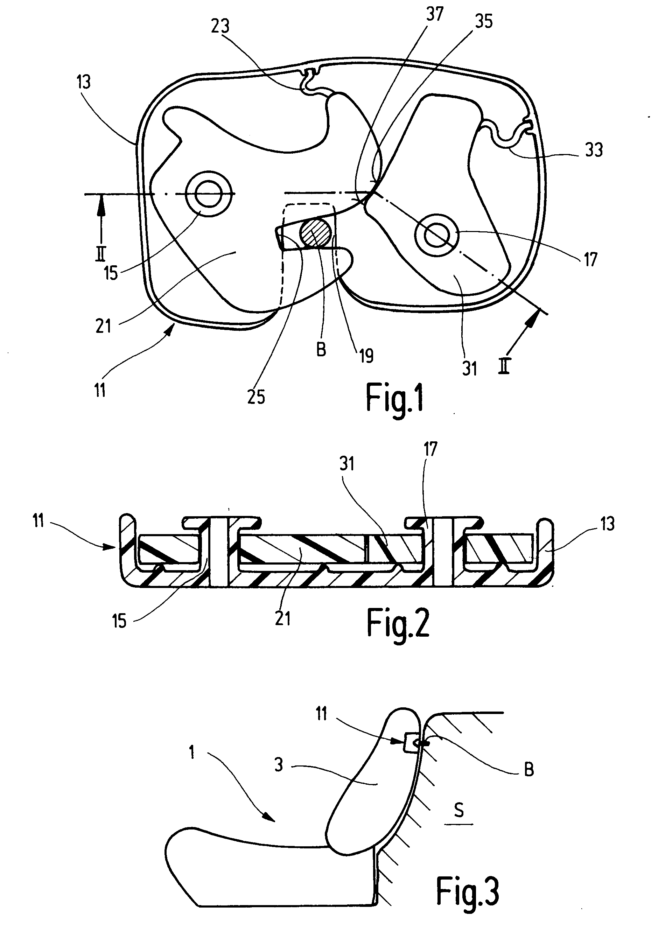

Die Schließvorrichtung 11 weist ein halboffenes Gehäuse 13 mit einem angeformten ersten Lagerzapfen 15 und einem hierzu parallelen, angeformten zweiten Lagerzapfen 17 auf. Der hochgezogene Rand des Gehäuses 13 ist an einer Stelle unterbrochen, um eine sich etwa bis zur Mitte des Gehäuses 13 ausgesparte Aufnahme 19 zugänglich zu machen. Auf dem ersten Lagerzapfen 15 ist eine Klinke 21 schwenkbar gelagert, welche durch ein an der Klinke 21 angeformtes, am Gehäuse 13 abgestütztes, erstes Federelement 23 in Öffnungsrichtung vorgespannt ist, und zwar in Fig. 1 im Uhrzeigersinn. Beim Schwenken streicht ein Maul 25 der Klinke 21 über die Aufnahme 19, wobei zum Verriegeln der Schließvorrichtung 11 das Gegenelement B von der Aufnahme 19 und dem sie kreuzenden Maul 25 aufgenommen wird.

Auf dem zweiten Lagerzapfen 17 ist ein Sicherungselement 31 schwenkbar gelagert, welches durch ein am Sicherungselement 31 angeformtes, am Gehäuse 13 abgestütztes, zweites Federelement 33 in Schließrichtung vorgespannt ist, und zwar in Fig. 1 gegen den Uhrzeigersinn. Das Sicherungselement 31 weist eine exzentrisch zum zweiten Lagerbolzen 17 gekrümmte Spannfläche 35 auf, mittels welcher das Sicherungselement 31 im Normalfall die Klinke 21 mit einem schließenden Moment beaufschlagt, so dass die Klinke 21 mit dem Gegenelement B verriegelt bleibt.

In Schließrichtung der Spannfläche 35 vorauseilend schließt sich an diese eine Fangfläche 37 an, welche eben ausgebildet ist und/oder parallel zur Kontur der Klinke 21 verläuft oder zentrisch um den zweiten Lagerbolzen 17 gekrümmt ist. Im Normalfall ist die Fangfläche 37 beabstandet zur Klinke 21 angeordnet. Im Crashfall, beispielsweise wenn das Sicherungselement 31 aufgrund einer die Vorspannkraft des zweiten Federelementes 33 übersteigenden Kraft in Öffnungsrichtung schwenken sollte, kommt die Fangfläche 37 in Anlage an die Klinke 21, so dass das Sicherungselement 31 mittels der Fangfläche 37 die geringfügig in Öffnungsrichtung bewegte Klinke 21 abstützt. Das von der Klinke 21 auf die Fangfläche 37 ausgeübte Moment wirkt dabei schließend oder neutral auf das Sicherungselement 31, d.h. die Flächennormale im Berührpunkt der beiden Bauteile 21 und 31 verläuft in Fig. 1 unterhalb des zweiten Lagerbolzens 17 vorbei oder durch diesen hindurch.

Zum Entriegeln der Schließvorrichtung 11 wird - beispielsweise mittels eines eingehakten Bowdenzuges, eines angeformten Kurbelansatzes oder eines angeformten Mehrkants - entgegen der Kraft des zweiten Federelementes 33 das Sicherungselement 31 in seine Öffnungsrichtung bewegt, d.h. in Fig. 1 im Uhrzeigersinn, wodurch die Klinke 21 freikommt. Das erste Federelement 23 drückt dann die Klinke 21 auf, welche das Gegenelement B freigibt, so dass die Lehne 3 von der Fahrzeugstruktur S gelöst werden kann.

Die Schließvorrichtung 11 ist vorliegend dafür ausgelegt, dass sie lediglich bei der Montage des Fahrzeugsitzes 1 an der Fahrzeugstruktur S mit dem Gegenelement B verriegelt und allenfalls bei einer Reparatur, beispielsweise bei einem Ausbau des Fahrzeugsitzes 1 oder der an sich starren Lehne 3, in einer Werkstatt entriegelt wird. Aufgrund des nahezu fehlenden Verschleißes ist es möglich, die Schließvorrichtung 11 vollständig aus Kunststoff anzufertigen, mit welchem auch die nötige Haltekraft und Stabilität für die allermeisten Anwendungsfälle erreicht werden kann.

Die Herstellung erfolgt mittels eines Mehrkomponentenkunststoffspritzgusses, d.h. eine oder mehrere Kunststoffkomponenten werden gleichzeitig oder nacheinander in ein geeignetes, gemeinsames Werkzeug einer Spritzgußmaschine gespritzt. Die verschiedenen Bestandteile der Schließvorrichtung 11 werden damit so angespritzt, dass die Schließvorrichtung 11 nach dem Verlassen der Spritzgußmaschine voll funktionsfähig ist und allenfalls in Verbindung mit einer Funktionsprüfung gangbar gemacht werden muß. Die Klinke 21 und das Sicherungselement 31 mit den jeweiligen Federelementen 23 und 33 entstehen somit bereits in ihren endgültigen Relativpositionen, ohne dass ein gesonderter Zusammenbau erforderlich ist. Durch ein unterschiedliches Schwindungsverhalten verschiedener Kunststoffe beim Abkühlen kann gezielt ein Spiel für eine Beweglichkeit der Bauteile erreicht werden, womit ein Öffnen, Schließen und Spannen möglich ist. Für spezielle Anwendungsfälle mit hohen Belastungen können Einlegeteile in bestimmte Bauteile mit eingespritzt werden, so dass sich die Festigkeit erhöht.

### Bezugszeichenliste

- 1: Fahrzeugsitz
- 3: Lehne
- 11: Schließvorrichtung
- 13: Gehäuse
- 15: erster Lagerzapfen
- 17: zweiter Lagerzapfen
- 19: Aufnahme
- 21: Klinke
- 23: erstes Federelement
- 25: Maul
- 31: Sicherungselement
- 33: zweites Federelement
- 35: Spannfläche
- 37: Fangfläche
- B: Gegenelement
- S: Fahrzeugstruktur

## Patentansprüche

1. Schließvorrichtung in einem Fahrzeug, insbesondere für einen Fahrzeugsitz, mit einem Gehäuse (13), einer am Gehäuse (13) gelagerten Klinke (21), welche zum Verriegeln der Schließvorrichtung (11) mit einem Gegenelement (B) zusammenwirkt, und wenigstens einem Sicherungselement (31), welches wenigstens im Normalfall die Klinke (21) gegen ein Öffnen sichert, **dadurch gekennzeichnet, dass** die Schließvorrichtung (11) vollständig oder nahezu vollständig aus Kunststoff besteht.

2. Schließvorrichtung nach Anspruch 1, **dadurch gekennzeichnet, dass** einzelne Bauteile der Schließvorrichtung (11) Einlegeteile aus einem von Kunststoff verschiedenen Material aufweisen, wobei die Einlegeteile wenigstens überwiegend mit Kunststoff bedeckt sind.

3. Schließvorrichtung nach Anspruch 1 oder 2, **dadurch gekennzeichnet, dass** die Schließvorrichtung (11) mittels eines Mehrkomponentenkunststoffspritzgußverfahrens hergestellt ist.

4. Schließvorrichtung nach Anspruch 3, **dadurch gekennzeichnet, dass** die Bauteile der Schließvorrichtung (11) in einem gemeinsamen Werkzeug in ihren endgültigen Relativpositionen entstehen.

5. Schließvorrichtung nach Anspruch 4, **dadurch gekennzeichnet, dass** die Schließvorrichtung (11) voll funktionsfähig aus dem Werkzeug genommen wird.

6. Schließvorrichtung nach einem der Ansprüche 1 bis 5, **dadurch gekennzeichnet, dass** die Klinke (21) und/oder das Sicherungselement (3 1) angeformte Federelemente (23, 33) zum Vorspannen aufweisen.

7. Schließvorrichtung nach einem der Ansprüche 1 bis 6, **dadurch gekennzeichnet, dass** am Gehäuse (13) Lagerzapfen (15, 17) für die Klinke (21) und/oder das Sicherungselement (31) angeformt sind.

8. Schließvorrichtung nach einem der Ansprüche 1 bis 7, **dadurch gekennzeichnet, dass** das Sicherungselement (31) eine Spannfläche (35) zur Beaufschlagung der Klinke (21) mit einem schließenden Moment im Normalfall aufweist.

9. Schließvorrichtung nach Anspruch 7 und 8, **dadurch gekennzeichnet, dass** die Spannfläche (35) exzentrisch zum Lagerzapfen (17) des Sicherungselementes (31) gekrümmt ist.

10. Schließvorrichtung nach einem der Ansprüche 1 bis 9, **dadurch gekennzeichnet, dass** das Sicherungselement (3 1) eine Fangfläche (37) zur Abstützung der Klinke (21) im Crashfall aufweist.

11. Fahrzeugsitz (1) mit einer Lehne (3), **gekennzeichnet durch** eine Schließvorrichtung (11) nach einem der Ansprüche 1 bis 10 zur Verriegelung der Lehne (3) mit einer Fahrzeugstruktur (S).
